# EUROPEAN PATENT SPECIFICATION

(11) **EP 2 714 267 B1**
(45) Date of publication and mention of the grant of the patent: **24.04.2024**
(21) Application number: 12727495.9
(22) Date of filing: 31.05.2012
(51) Int. Cl.: B01J 23/40, B01J 29/064, B01J 29/76, B01D 53/94

(54) **COLD START CATALYST AND ITS USE IN EXHAUST SYSTEMS**
KALTSTARTKATALYSATOR UND SEINE VERWENDUNG IN ABGASANLAGEN
CATALYSEUR DE DÉMARRAGE À FROID ET SON UTILISATION DANS DES DISPOSITIFS D'ÉCHAPPEMENT

(30) Priority: 01.06.2011 US 201113150659
(43) Date of publication of application: 09.04.2014
(73) Proprietor: Johnson Matthey Public Limited Company, London EC4A 4AB (GB)
(72) Inventor: CHEN, Hai-Ying, Conshohocken, Pennsylvania 19428 (US); MULLA, Shadab, Pottstown, Pennsylvania 19464 (US)
(74) Representative: Johnson Matthey Plc
(86) International application number: PCT/US2012/040137
(87) International publication number: WO 2012/166868

(56) References cited:
- EP-A1- 0 782 880
- WO-A2-2007/107371
- US-A- 5 120 695
- US-B1- 6 248 684

## Description

The invention relates to an exhaust system comprising a cold start catalyst and its use for internal combustion engines.

### BACKGROUND OF THE INVENTION

Internal combustion engines produce exhaust gases containing a variety of pollutants, including nitrogen oxides ("NOₓ"), carbon monoxide, and uncombusted hydrocarbons, which are the subject of governmental legislation. Emission control systems are widely utilized to reduce the amount of these pollutants emitted to atmosphere, and typically achieve very high efficiencies once they reach their operating temperature (typically, 200°C and higher). However, these systems are relatively inefficient below their operating temperature, such as during the "cold start" period.

As even more stringent national and regional legislation lowers the amount of pollutants that can be emitted from diesel or gasoline engines, reducing emissions during the cold start period is becoming a major challenge. Thus, methods for reducing the level of NOₓ and hydrocarbons emitted during cold start condition continue to be explored.

For cold start hydrocarbon control, hydrocarbon trapping components based on zeolites have been investigated. In these systems, the zeolite adsorbs and stores hydrocarbons during the start-up period and releases the stored hydrocarbons when the exhaust temperature is high enough to desorb hydrocarbons. The desorbed hydrocarbons are subsequently converted when the downstream catalytic components reach their operating temperature.

For cold start NOₓ control, especially under lean-burn conditions, NOₓ storage and release catalysts have been studied. The catalysts adsorb NOₓ during the warm-up period and thermally desorb NOₓ at higher exhaust temperatures. Downstream catalysts, such as selective catalytic reduction ("SCR") or NOₓ adsorber catalysts ("NAC"), effectively reduce the desorbed NOₓ to nitrogen.

Typically, NOₓ adsorbent materials consist of inorganic oxides such as alumina, silica, ceria, zirconia, titania, or mixed oxides which are coated with at least one platinum group metal. PCT Intl. Appl. WO 2008/047170 discloses a system wherein NOₓ from a lean exhaust gas is adsorbed at temperatures below 200°C and is subsequently thermally desorbed above 200°C. The NOₓ adsorbent is taught to consist of palladium and a cerium oxide or a mixed oxide or composite oxide containing cerium and at least one other transition metal.

PCT Intl. Appl. WO 2004/076829 discloses an exhaust-gas purification system which includes a NOₓ storage catalyst arranged upstream of an SCR catalyst. The NOₓ storage catalyst includes at least one alkali, alkaline earth, or rare earth metal which is coated or activated with at least one platinum group metal (Pt, Pd, Rh, or Ir). A particularly preferred NOₓ storage catalyst is taught to include cerium oxide coated with platinum and additionally platinum as an oxidizing catalyst on a support based on aluminum oxide. EP 1027919 discloses a NOₓ adsorbent material that comprises a porous support material, such as alumina, zeolite, zirconia, titania, and/or lanthana, and at least 0.1 wt% precious metal (Pt, Pd, and/or Rh). Platinum carried on alumina is exemplified.

In addition, US Pat. Nos. 5,656,244 and 5,800,793 describe systems combining a NOₓ storage/release catalyst with a three way catalyst. The NOₓ adsorbent is taught to comprise oxides of chromium, copper, nickel, manganese, molybdenum, or cobalt, in addition to other metals, which are supported on alumina, mullite, cordierite, or silicon carbide. PCT Intl. Appl. WO 03/056150 describes a system combining a low temperature NO₂ trap material and a soot filter. The low temperature NO₂ trap material is taught to comprise of zeolites exchanged with base metal cations, with the zeolites selected from ZSM-5, ETS-10, Y-zeolite, beta zeolite, ferrierite, mordenite, titanium silicates and aluminum phosphates and the base metals selected from Mn, Cu, Fe, Co, W, Re, Sn, Ag, Zn, Mg, Li, Na, K, Cs, Nd and Pr.

EP0782880 describes a monolithic carrier and a catalyst-adsorbent layer formed thereon, the catalyst-adsorbent layer comprising a catalyst for reduction of the carbon monoxide, hydrocarbons and nitrogen oxides emitted from internal combustion engines and an adsorbent for reduction of the hydrocarbons emitted during the cold start of said engines.

US5120695 describes a full solid, one-piece exhaust-gas purifying reduction catalyst in honeycomb form for selective reduction of nitrogen oxides by ammonia gas or by an ammonia producing compound said honeycomb having a trailing-edge portion which is coated with an oxidation catalyst.

Unfortunately, the NOₓ adsorption capacity of such systems is not high enough especially at high NOₓ storage efficiency. Because of increasing stringent global legislation regulating the amount of NOₓ and hydrocarbons released to the atmosphere from internal combustion engines, the need for more effective exhaust gas cleaning during cold start conditions is always present.

As with any automotive system and process, it is desirable to attain still further improvements in exhaust gas treatment systems, particularly under cold start conditions. We have discovered a new cold start catalyst that provides enhanced cleaning of the exhaust gases from internal combustion engines.

### SUMMARY OF THE INVENTION

The invention is an exhaust system comprising a cold start catalyst and a flow-through or filter substrate, as defined in the claims. The cold start catalyst comprises (1) a zeolite catalyst comprising iron, palladium, and a zeolite; and (2) a supported platinum group metal catalyst comprising one or more platinum group metals and one or more inorganic oxide carriers, wherein the zeolite catalyst forms the flow-through or filter substrate, and the supported platinum group metal catalyst is coated onto the zeolite catalyst flow-through or filter substrate. The exhaust system comprising the cold start catalyst effectively reduces emissions during the cold start period through improved NOₓ storage and NOₓ conversion, improved hydrocarbon storage and conversion, and improved CO oxidation.

### DETAILED DESCRIPTION OF THE INVENTION

The exhaust system of the invention is defined in the claims and comprises a cold start catalyst that comprises a zeolite catalyst and a supported platinum group metal catalyst and a flow-through or filter substrate. The zeolite catalyst comprises iron (a base metal), palladium (a noble metal), and a zeolite. The zeolite catalyst forms the flow-through or filter substrate, and the supported platinum group metal catalyst is coated onto the zeolite catalyst flow-through or filter substrate.

The zeolite may be any natural or a synthetic zeolite, including molecular sieves, and is preferably composed of aluminum, silicon, and/or phosphorus. The zeolites typically have a three-dimensional arrangement of SiO₄, AlO₄, and/or PO₄ that are joined by the sharing of oxygen atoms. The zeolite frameworks are typically anionic, which are counterbalanced by charge compensating cations, typically alkali and alkaline earth elements (e.g., Na, K, Mg, Ca, Sr, and Ba) and also protons. Other metals (e.g., Fe, Ti, and Ga) may be incorporated into the framework of the zeolite to produce a metal-incorporated zeolite. For instance, iron may be substituted for aluminum in the framework of beta zeolite to produce an iron-beta zeolite (Fe-β zeolite).

The zeolite is preferably a beta zeolite, a faujasite (such as an X-zeolite or a Y-zeolite, including NaY and USY), an L-zeolite, a ZSM zeolite (e.g., ZSM-5, ZSM-48), an SSZ-zeolite (e.g., SSZ-13, SSZ-41, SSZ-33), a mordenite, a chabazite, an offretite, an erionite, a clinoptilolite, a silicalite, an aluminum phosphate zeolite (including metalloaluminophosphates such as SAPO-34), a mesoporous zeolite (e.g., MCM-41, MCM-49, SBA-15), a metal-incorporated zeolite, or mixtures thereof; more preferably, the zeolites are beta zeolite, ZSM-5 zeolite, Fe-β zeolite, or SSZ-33, or Y-zeolite. The zeolite is most preferably beta zeolite, ZSM-5 zeolite, Fe-β zeolite, or SSZ-33.

The zeolite catalyst may be prepared by any known means. For instance, the base metal and noble metal may be added to the zeolite to form the zeolite catalyst by any known means, the manner of addition is not considered to be particularly critical. For example, a noble metal compound (such as palladium nitrate) and a base metal compound (such as iron nitrate) may be supported on the zeolite by impregnation, adsorption, ion-exchange, incipient wetness, precipitation, or the like. The noble metal compound and a base metal compound may be added to the zeolite simultaneously in one step, or sequentially in two or more steps.

The supported platinum group metal catalyst comprises one or more platinum group metals ("PGM") and one or more inorganic oxide carriers. The PGM may be platinum, palladium, rhodium, iridium, or combinations thereof, and most preferably platinum and/or palladium. The inorganic oxide carriers most commonly include oxides of Groups 2, 3, 4, 5, 13 and 14 elements. Useful inorganic oxide carriers preferably have surface areas in the range 10 to 700 m²/g, pore volumes in the range 0.1 to 4 mL/g, and pore diameters from about 10 to 1000 Angstroms. The inorganic oxide carrier is preferably alumina, silica, titania, zirconia, ceria, niobia, tantalum oxides, molybdenum oxides, tungsten oxides, or mixed oxides or composite oxides of any two or more thereof, e.g. silica-alumina, ceria-zirconia or alumina-ceria-zirconia. Alumina and ceria are particularly preferred.

The supported platinum group metal catalyst may be prepared by any known means. Preferably, the one or more platinum group metals are loaded onto the one or more inorganic oxides by any known means to form the supported PGM catalyst, the manner of addition is not considered to be particularly critical. For example, a platinum compound (such as platinum nitrate) may be supported on an inorganic oxide by impregnation, adsorption, ion-exchange, incipient wetness, precipitation, or the like. Other metals may also be added to the supported PGM catalyst.

The zeolite catalyst forms the flow-through or filter substrate. The flow-through or filter substrate is a substrate that is capable of containing catalyst components.

The flow-through substrate is preferably a flow-through monolith having a honeycomb structure with many small, parallel thin-walled channels running axially through the substrate and extending throughout from an inlet or an outlet of the substrate. The channel cross-section of the substrate may be any shape, but is preferably square, sinusoidal, triangular, rectangular, hexagonal, trapezoidal, circular, or oval.

The filter substrate is preferably a wall-flow monolith filter. The channels of a wall-flow filter are alternately blocked, which allow the exhaust gas stream to enter a channel from the inlet, then flow through the channel walls, and exit the filter from a different channel leading to the outlet. Particulates in the exhaust gas stream are thus trapped in the filter.

The supported platinum group catalyst may be added to the zeolite catalyst flow-through or filter substrate by any known means. A representative process for preparing the cold start catalyst using a washcoat procedure is set forth below. It will be understood that the process below can be varied according to different embodiments of the invention.

The flow-through or filter substrate is comprised of the zeolite catalyst, and the supported platinum group metal catalyst is coated onto the zeolite catalyst substrate. In this case, the zeolite is extruded to form the flow-through or filter substrate, and is preferably extruded to form a honeycomb flow-through monolith. Extruded zeolite substrates and honeycomb bodies, and processes for making them, are known in the art. See, for example, U.S. Pat. Nos. 5,492,883, 5,565,394, and 5,633,217 and U.S. Pat. No. Re. 34,804. Typically, the zeolite material is mixed with a permanent binder such as silicone resin and a temporary binder such as methylcellulose, and the mixture is extruded to form a green honeycomb body, which is then calcined and sintered to form the final zeolite flow-through monolith. The zeolite may contain noble metal and/or base metal prior to extruding such that a noble metal/zeolite, base metal/zeolite, or noble metal-base metal/zeolite flow-through monolith is produced by the extrusion procedure.

If a zeolite flow-through monolith is formed, the zeolite monolith is then subjected to an impregnation procedure if necessary to load noble metal and/or base metal to the zeolite monolith, followed by a washcoating step to washcoat the supported PGM catalyst.

The washcoat addition of the supported PGM catalyst is preferably accomplished by first preparing a slurry of finely divided particles of the supported PGM catalyst in an appropriate solvent, preferably water. Prior to forming the slurry, the supported PGM catalyst particles are preferably subject to a size reduction treatment (e.g., milling) such that the average particle size of the solid particles is less than 20 microns in diameter. Additional components, such as transition metal oxides, binders, stabilizers, or promoters may be incorporated in the slurry as a mixture of water-dispersible or soluble compounds.

The zeolite catalyst-coated substrate may then be dipped one or more times in the supported PGM catalyst slurry or the supported PGM catalyst slurry may be coated on the zeolite catalyst-coated substrate such that there will be deposited on the substrate the desired loading of catalytic materials.

Alternatively, a slurry containing only the inorganic oxide(s) may first be deposited on the zeolite catalyst-coated substrate to form an inorganic oxide-coated substrate, followed by drying and calcination steps. The platinum group metal(s) may then be added to the inorganic oxide-coated substrate by any known means, including impregnation, adsorption, or ion-exchange of a platinum group metal compound (such as platinum nitrate).

Preferably, the entire length of the zeolite catalyst flow-through or filter substrate is coated with the supported PGM catalyst slurry so that a washcoat of the supported PGM catalyst covers the entire surface of the substrate.

After the zeolite catalyst flow-though or filter substrate has been coated with the supported PGM catalyst slurry, it is preferably dried and then calcined by heating at an elevated temperature to produce the cold start catalyst. Preferably, the calcination occurs at 400 to 600°C for approximately 1 to 8 hours.

The invention includes an exhaust system for internal combustion engines comprising the cold start catalyst. The exhaust system preferably comprises one or more additional after-treatment devices capable of removing pollutants from internal combustion engine exhaust gases at normal operating temperatures. Preferably, the exhaust system comprises the cold start catalyst and: (1) a selective catalytic reduction system; (2) a particulate filter; (3) a selective catalytic reduction filter system; (4) a NOₓ adsorber catalyst; (5) a three-way catalyst system; or any combination thereof.

These after-treatment devices are well known in the art. Selective catalytic reduction (SCR) systems are devices that reduce NOₓ to N₂ by reaction with nitrogen compounds (such as ammonia or urea) or hydrocarbons (lean NOₓ reduction). A typical SCR catalyst is comprised of a vanadia-titania catalyst, a vanadia-tungsta-titania catalyst, or a metal/zeolite catalyst such as iron/beta zeolite, copper/beta zeolite, copper/SSZ-13, copper/SAPO-34, Fe/ZSM-5, or copper/ZSM-5.

Particulate filters are devices that reduce particulates from the exhaust of internal combustion engines. Particulate filters include catalyzed particulate filters and bare (non-catalyzed) particulate filters. Catalyzed particulate filters (for diesel and gasoline applications) include metal and metal oxide components (such as Pt, Pd, Fe, Mn, Cu, and ceria) to oxidize hydrocarbons and carbon monoxide in addition to destroying soot trapped by the filter.

Selective catalytic reduction filters (SCRF) are single-substrate devices that combine the functionality of an SCR and particulate filter. They are used to reduce NOₓ and particulate emissions from internal combustion engines.

NOₓ adsorber catalysts (NACs) are designed to adsorb NOₓ under lean exhaust conditions, release the adsorbed NOₓ under rich conditions, and reduce the released NOₓ to form N₂. NACs typically include a NOₓ-storage component (e.g., Ba, Ca, Sr, Mg, K, Na, Li, Cs, La, Y, Pr, and Nd), an oxidation component (preferably Pt) and a reduction component (preferably Rh). These components are contained on one or more supports.

Three-way catalyst systems (TWCs) are typically used in gasoline engines under stoichiometric conditions in order to convert NOₓ to N₂, carbon monoxide to CO₂, and hydrocarbons to CO₂ and H₂O on a single device.

The exhaust system can be configured so that the cold start catalyst is located close to the engine and the additional after-treatment device(s) are located downstream of the cold start catalyst. Thus, under normal operating conditions, engine exhaust gas first flows through the cold start catalyst prior to contacting the after-treatment device(s). Alternatively, the exhaust system may contain valves or other gas-directing means such that during the cold-start period (below a temperature ranging from about 150 to 220°C, as measured at the after-treatment device(s)), the exhaust gas is directed to contact the after-treatment device(s) before flowing to the cold start catalyst. Once the after-treatment device(s) reaches the operating temperature (about 150 to 220°C, as measured at the after-treatment device(s)), the exhaust gas flow is then redirected to contact the cold start catalyst prior to contacting the after-treatment device(s). This ensures that the temperature of the cold start catalyst remains low for a longer period of time, and thus improves efficiency of the cold start catalyst, while simultaneously allowing the after-treatment device(s) to more quickly reach operating temperature. U.S. Pat. No. 5,656,244, for example, teaches means for controlling the flow of the exhaust gas during cold-start and normal operating conditions.

The following examples merely illustrate the invention.

### EXAMPLE 1: PREPARATION OF CATALYSTS

### Reference Catalyst 1A: Pd-Fe/beta zeolite + Pt/Al₂O₃

Beta zeolite is added to an aqueous iron nitrate, followed by silica binder to form a slurry. The slurry is coated on a flow-through cordierite substrate to achieve an iron loading of 190 g/ft³ Fe, and the Fe/zeolite-coated substrate is dried, and then calcined by heating at 500°C for 4 hours. Palladium is then added to the Fe/zeolite-coated substrate by impregnation of an aqueous Pd nitrate solution to achieve a Pd loading of 50 g/ft³, and the Pd-Fe/zeolite-coated substrate is dried and then calcined by heating at 500°C for 4 hours.

Platinum nitrate is added to a water slurry of alumina particles (milled to an average particle size of less than 10 microns in diameter) to form a Pt/alumina catalyst slurry. The Pt/alumina catalyst slurry is then coated on the Pd-Fe/zeolite-coated substrate to achieve a Pt loading of 50 g/ft³, and the final coated substrate is dried, and then calcined by heating at 500°C for 4 hours to produce Catalyst 1A (containing 50 g/ft³ Pd, 190 g/ft³ Fe, and 50 g/ft³ Pt).

### Reference Catalyst 1B: Pd-Fe/beta zeolite + Pt/Al₂O₃ + Pd/CeO₂

Catalyst 1B is prepared by adding a Pd/ceria component to the finished Catalyst 1A. Palladium/ceria is prepared by the incipient wetness of palladium nitrate onto ceria, followed by drying and calcining at 500°C for 2 hours. The Pd/ceria is then milled to an average particle size of less than 10 microns in diameter, and added to water to form a slurry. The Pd/ceria slurry and the Pt/alumina slurry from the Catalyst 1A preparation are coated on the Pd-Fe/zeolite-coated substrate from the Catalyst 1A preparation to achieve a Pd loading of 50 g/ft³, and the final coated substrate is dried, and then calcined by heating at 500°C for 4 hours to produce Catalyst 1B (containing 50 g/ft³ Pd and 190 g/ft³ Fe on zeolite; 50 g/ft³ Pt on alumina; and 50 g/ft³ Pd on ceria).

### Catalyst 1C: Pd-Fe on extruded beta zeolite + Pd/CeO₂ + Pt/Al₂O₃

A beta zeolite monolith (formed by extruding beta zeolite into a honeycomb monolith; see, e.g., U.S. Pat. Nos. 5,492,883, 5,565,394, and 5,633,217) is impregnated with an aqueous iron nitrate solution, followed by drying, and calcining by heating at 500°C for 4 hours to achieve a Fe loading of 800 g/ft³; and then impregnated with a palladium nitrate solution, followed by drying, and calcining at 500°C for 4 hours to achieve a Pd loading of 50 g/ft³.

The Fe-Pd/zeolite monolith is then coated with a supported PGM catalyst in two washcoat steps as follows. Pd/ceria (prepared as in Catalyst 1B) and alumina particles are separately milled to an average particle size of less than 10 microns in diameter, and are added to water to form a slurry. The Pd/ceria and alumina slurry is then coated onto the Fe-Pd/zeolite monolith to achieve a Pd loading of 40 g/ft³, and the coated substrate is dried, and then calcined by heating at 500°C for 4 hours. The substrate is then washcoated with a supported Pt/alumina catalyst as in Catalyst 1A, dried, and then calcined to produce Catalyst 1C (containing 50 g/ft³ Pd, 800 g/ft³ Fe on extruded zeolite; 40 g/ft³ Pd on ceria; and 50 g/ft³ Pt on alumina).

### Reference Catalyst 1D: Pd-Fe/ZSM5 + Pt/Al₂O₃

The procedure of Catalyst 1A is repeated, with the exception that an iron-containing ZSM5 zeolite (7 wt.% Fe₂O₃) is used in place of Fe/beta zeolite to produce Catalyst 1D (containing 50 g/ft³ Pd, 170 g/ft³ Fe on zeolite; and 50 g/ft³ Pt on alumina).

### Reference Catalyst 1E: Pd supported on Fe-β zeolite + Pt/Al₂O₃

The procedure of Catalyst 1A is repeated, with the exception that an iron-incorporated beta zeolite (Fe-β zeolite in which the Al atoms have been substituted by Fe) is used in place of Fe/beta zeolite to produce Catalyst 1E (containing 50 g/ft³ Pd, 250 g/ft³ Fe from the zeolite; and 50 g/ft³ Pt on alumina).

### EXAMPLE 2: COMPARATIVE CATALYST PREPARATION

### Comparative Catalyst 2A: Pt/Al₂O₃ + Pd/CeO₂

Comparative Catalyst 2A is a conventional catalyst for cold start NOₓ control, similar to the layered system disclosed in WO 2008/047170. It is prepared according to the procedure of Catalyst 1C, with the exception that the coating is performed on a flow-through cordierite substrate, the Pd-Fe on extruded beta zeolite is not included, and the Pd and Pt loadings are also increased. Comparative Catalyst 2A contains 100 g/ft³ Pd on Pd/ceria and 100 g/ft³ Pt on Pt/alumina.

### Comparative Catalyst 2B: Pd-Pt/Al₂O₃ + beta zeolite + Pt/Al₂O₃

Comparative Catalyst 2B is a typical diesel oxidation catalyst that contains zeolite as a hydrocarbon trapping component. It is prepared as follows.

Platinum nitrate and palladium nitrate are added to a water slurry of alumina particles (milled to an average particle size of less than 10 microns in diameter), followed by the addition of the beta zeolite to the slurry. The Pt-Pd/alumina and beta zeolite slurry is then coated on a flow-through cordierite substrate to achieve a Pt loading of 17.5 g/ft³ and a Pd loading of 35 g/ft³, and coated substrate is dried, and then calcined at 500°C for 4 hours.

The zeolite monolith is then washcoated with a supported PGM catalyst as in the procedure of Catalyst 1A to result in a second washcoat Pt loading of 52.5 g/ft³. The substrate is dried and then calcined to produce Comparative Catalyst 2B, containing 70 g/ft³ Pt and 35 g/ft³ Pd.

### EXAMPLE 3: TESTING PROCEDURES

All the catalysts are tested on core samples (2.54 cm x 8.4 cm) of the flow-through catalyst-coated cordierite substrate. Catalyst cores are first aged under flow-through conditions in a furnace under hydrothermal conditions (5% H₂O, balance air) at 750°C for 16 hours. The cores are then tested for catalytic activity in a laboratory reactor, using a feed gas stream that is prepared by adjusting the mass flow of the individual exhaust gas components. The gas flow rate is maintained at 21.2 L min⁻¹ resulting in a Gas Hourly Space Velocity of 30,000 h⁻¹ (GHSV = 30, 000 h⁻¹).

The catalysts are tested under lean conditions, using a synthetic exhaust gas feed stream consisting of 200 ppm NO, 200 ppm CO, 500 ppm decane (on C₁ basis), 10% O₂, 5% CO₂, 5% H₂O and the balance nitrogen (volume %). The catalyst is exposed to the feed gas stream, first at an isothermal inlet gas temperature of 80°C for 100 seconds, following which the inlet gas temperature is increased linearly with time at 100°C/min.

Catalyst 1C is also tested under stoichiometric conditions, using a synthetic gas composition consisting of 2000 ppm NO, 1% CO, 0.33% H₂, 600 ppm propane (on C₁ basis), 600 ppm propene (on C₁ basis), 0.76% O₂, 14% CO₂, 10% H₂O and the balance nitrogen (volume %). The catalyst is exposed to the synthetic gas stream, first at an isothermal inlet gas temperature of 80°C for 100 seconds, following which the inlet gas temperature is increased linearly with time at 100°C/min. Thus, the catalyst is exposed to the synthetic gas stream at 80°C for the first 100 seconds of testing and the temperature exceeds 200°C after the first 172 seconds of testing.

The results at Table 1 show that the catalysts (1A-1E) demonstrate much higher NOₓ storage capacity at low temperature (80°C for first 100 seconds of testing) and typically a higher NOₓ storage capacity below 200°C (i.e., about the first 172 seconds of testing) when exposed to a synthetic lean gas stream, as compared to Comparative Catalysts 2A and 2B. Both Comparative Catalysts 2A and 2B show an instantaneous, sharp NOₓ slip at catalyst outlet, indicating negligible NOₓ storage at lower temperatures. The total NOₓ storage capacity below 200°C represents the amount of NOₓ stored below this temperature and the amount of NOₓ that may have been converted (at least partially) by the catalyst during the temperature increase to 200°C. Thus, the total NOₓ storage capacity below 200°C represents the NOₓ that has either been converted (at least partially) by the catalyst during the temperature increase to 200°C or can be subsequently released by the catalyst at temperatures greater than 200°C and then converted by a downstream NOₓ reduction catalyst, as they would have reached their operating window.

Despite the fact that Reference Catalyst 1A has only half the PGM loading of Comparative Catalyst 2A and a comparable total PGM loading to Comparative Catalyst 2B, Catalyst 1A effectively stores significantly higher amounts of NOₓ under cold start conditions, suggesting the added benefit of the presence of base metal and noble metal on the zeolite. A further significant increase in the cold start NOₓ storage is achieved with Catalysts 1B, where Pd is also supported on ceria in addition to the zeolite, and Catalyst 1C, where the zeolite is extruded as a substrate body and still provides high NOₓ storage capacity. Catalysts 1D and 1E show that ZSM-5 and an iron-incorporated beta zeolite (Fe-β zeolite) can also be used for NOₓ storage under cold-start conditions.

The catalysts also effectively store hydrocarbons during the cold start phase. At temperatures below 150°C, Catalysts 1A, 1B and 1C store a similar amount of hydrocarbon (HC) as Comparative Catalysts 2A and 2B. For example, the amount of hydrocarbon stored in 100 seconds at 80°C was about 0.29 g CH₄/L of catalysts for Catalysts 1A-1C and Comparative Catalysts 2A and 2B. At temperatures greater than 150°C, a significantly higher HC slip is obtained for Comparative Catalysts 2A and 2B compared to Catalysts 1A, 1B, and 1C. See Table 2. The peak hydrocarbon concentration resulting from testing of Comparative Catalysts 2A and 2B (greater than 100 ppm) is twice as much as that obtained for Catalysts 1A, 1B, and 1C (about 50 ppm), suggesting that the catalysts not only effectively store hydrocarbons during the cold start, but also convert the stored hydrocarbons more effectively when the temperature is increased.

The catalysts also exhibit lower selectivity to N₂O during the cold start phase. At temperatures below 150°C, Catalysts 1A, 1B and 1C and Comparative Catalysts 2A and 2B all show no production of N₂O. Above 150°C, N₂O is detected for all catalysts. However, Table 2 also shows that only low levels of N₂O form over Catalysts 1A, 1B, and 1C, as indicated by the peak N₂O concentration released during the warm-up. In contrast, a significantly higher amount of N₂O is detected over the two comparative catalysts. These results indicate that the catalysts of exhibit higher selectivity to N₂.

Besides cold start NOₓ and HC control, Catalysts 1A-1C also unexpectedly exhibit improved CO oxidation activity. As seen in Table 3, Catalysts 1A-1C show a significantly lower temperature to achieve 90% CO conversion during the warm-up ("T90") as compared to Comparative Catalyst 2B, a typical diesel oxidation catalyst. Because the amount of PGM affects the CO oxidation activity, Comparative Catalyst 2A having a significantly higher amount of PGM expectedly has the lowest T90.

In addition, once the catalysts reach the operating temperature (e.g. > 200°C), Catalysts 1A-1C all show comparable NO to NO₂ oxidation activity to Comparative Catalyst 2B. This is shown in Table 4 by the ratio of NO₂ formed to the total NOₓ at 400°C inlet gas temperature. Note, once again, that Comparative Catalyst 2A has a higher Pt loading (100 g/ft³) compared to Catalysts 1A, 1B, 1C (50 g/ft³) or Comparative Catalyst 2B (70 g/ft³) explaining its relatively higher CO and NO oxidation activity.

In addition to their capabilities under lean operating conditions, Catalyst 1C also demonstrates good NOₓ and hydrocarbon storage capacity for cold start conditions as well as good CO oxidation activity, when tested under stoichiometric conditions, as shown in Table 5.

In summary, the cold start catalyst system of the invention performs multiple functions, including (1) low temperature NOₓ storage and conversion with high selectivity to N₂; (2) low temperature hydrocarbon storage and conversion; (3) improved CO oxidation activity; and (4) comparable NO to NO₂ oxidation activity after warm-up.

**TABLE 1: NOₓ Storage Capacity Results**

| Catalyst | NOₓ storage Capacity at 80°C (g NO₂/L) | Total NOₓ Storage Capacity below 200°C(g NO₂/L) |
|---|---|---|
| 1A | 0.20 | 0.21 |
| 1B | 0.32 | 0.47 |
| 1C | 0.29 | 0.44 |
| 1D | 0.14 | (nm) |
| 1E | 0.17 | (nm) |
| 2A * | 0.13 | 0.30 |
| 2B * | 0.02 | 0.06 |

| | | |
|---|---|---|
| * Comparative Example nm = not measured | | |

**TABLE 2: Hydrocarbon (HC) and N₂O Release above 150°C**

| Catalyst | Peak HC concentration during warm-up (ppm) | Peak N₂O concentration during warm-up (ppm) |
|---|---|---|
| 1A | 53 | 28 |
| 1B | 49 | 20 |
| 1C | 56 | 31 |
| 2A * | 119 | 126 |
| 2B * | 108 | 74 |

| | | |
|---|---|---|
| * Comparative Example | | |

**TABLE 3: Temperature for 90% CO conversion (T90) during Warm-up**

| Catalyst | T90 (°C) |
|---|---|
| 1A | 145 |
| 1B | 154 |
| 1C | 150 |
| 2A * | 102 |
| 2B * | 219 |

| | |
|---|---|
| * Comparative Example | |

**TABLE 4: NO₂/NOₓ ratio at 400°C**

| Catalyst | NO₂/NOₓ |
|---|---|
| 1A | 0.63 |
| 1B | 0.62 |
| 1C | 0.74 |
| 2A * | 0.89 |
| 2B * | 0.73 |

| | |
|---|---|
| * Comparative Example | |

**TABLE 5: Performance of Catalyst 1C under Stoichiometric Conditions**

| NOₓ storage Capacity at 80°C (g NO₂/L) | Total NOₓ Storage Capacity below 200°C(g NO₂/L) | HC storage Capacity at 80°C (g CH₄/L) | T90 for CO conversion (°C) |
|---|---|---|---|
| 0.33 | 0.39 | 0.19 | 202 |

## Claims

1. An exhaust system comprising a cold start catalyst and a flow-through or filter substrate, the cold start catalyst comprising
(1) a zeolite catalyst comprising iron, palladium, and a zeolite; and
(2) a supported platinum group metal catalyst comprising one or more platinum group metals and one or more inorganic oxide carriers,
wherein the zeolite catalyst forms the flow-through or filter substrate, and the supported platinum group metal catalyst is coated onto the zeolite catalyst flow-through or filter substrate.

2. The exhaust system of claim 1 wherein the flow-through substrate is a honeycomb monolith.

3. The exhaust system of claim 1 for internal combustion engines further comprising: a selective catalytic reduction catalyst system; a particulate filter; a selective catalyst reduction filter system; a NOₓ adsorber catalyst; a three-way catalyst system; or combinations thereof.

4. The exhaust system of claim 1, wherein the zeolite is selected from the group consisting of a beta zeolite, a faujasite, an L-zeolite, a ZSM zeolite, an SSZ-zeolite, a mordenite, a chabazite, an offretite, an erionite, a clinoptilolite, a silicalite, an aluminum phosphate zeolite, a mesoporous zeolite, a metal-incorporated zeolite, and mixtures thereof.

5. The exhaust system of claim 1 wherein the zeolite is selected from the group consisting of beta zeolite, ZSM-5, Fe-β zeolite, SSZ-33, Y-zeolite, and mixtures thereof.

6. The exhaust system of claim 5, wherein the zeolite is beta zeolite.

7. The exhaust system of claim 1 wherein the one or more platinum group metals is selected from the group consisting of platinum, palladium, rhodium, iridium, and mixtures thereof.

8. The exhaust system of claim 1 wherein the one or more inorganic oxide carriers is selected from the group consisting of alumina, silica, titania, zirconia, ceria, niobia, tantalum oxides, molybdenum oxides, tungsten oxides, and mixed oxides or composite oxides thereof.

9. The exhaust system of claim 8 wherein the one or more inorganic oxide carriers comprises alumina and ceria.

## Patentansprüche

1. Abgassystem, umfassend einen Kaltstartkatalysator und ein Durchfluss- oder Filtersubstrat, der Kaltstartkatalysator umfassend
(1) einen Zeolith-Katalysator, umfassend Eisen, Palladium und einen Zeolithen; und
(2) einen Metallträgerkatalysator der Platingruppe, umfassend ein oder mehrere Metalle der Platingruppe und einen oder mehrere anorganische Oxidträger,
wobei der Zeolith-Katalysator das Durchfluss- oder Filtersubstrat ausbildet und der Metallträgerkatalysator der Platingruppe auf das Durchfluss- oder Filtersubstrat des Zeolith-Katalysators aufgetragen ist.

2. Abgassystem nach Anspruch 1, wobei das Durchflusssubstrat ein Wabenmonolith ist.

3. Abgassystem nach Anspruch 1 für Verbrennungsmotoren, ferner umfassend: ein selektives katalytisches
Reduktionskatalysatorsystem; einen Partikelfilter; ein Filtersystem für selektive Katalysatorreduktion; einen NO_{X}-Adsorptionskatalysator; ein Dreiwegekatalysatorsystem; oder Kombinationen davon.

4. Abgassystem nach Anspruch 1, wobei der Zeolith aus der Gruppe ausgewählt ist bestehend aus einem Beta-Zeolith, einem Faujasit, einem L-Zeolith, einem ZSM-Zeolith, einem SSZ-Zeolith, einem Mordenit, einem Chabazit, einem Offretit, einem Erionit, einem Klinoptilolith, einem Silicalit, einem Aluminiumphosphat-Zeolith, einem mesoporösen Zeolith, einem metallinkorporierten Zeolith und Mischungen davon.

5. Abgassystem nach Anspruch 1, wobei der Zeolith aus der Gruppe ausgewählt ist bestehend aus Beta-Zeolith, ZSM-5, Fe-β-Zeolith, SSZ-33, Y-Zeolith und Mischungen davon.

6. Abgassystem nach Anspruch 5, wobei der Zeolith Beta-Zeolith ist.

7. Abgassystem nach Anspruch 1, wobei das eine oder die mehreren Metalle der Platingruppe aus der Gruppe ausgewählt sind bestehend aus Platin, Palladium, Rhodium, Iridium und Mischungen davon.

8. Abgassystem nach Anspruch 1, wobei der eine oder die mehreren anorganischen Oxidträger ausgewählt sind aus der Gruppe bestehend aus Aluminiumoxid, Siliziumdioxid, Titandioxid, Zirkoniumdioxid, Cerdioxid, Nioboxid, Tantaloxiden, Molybdänoxiden, Wolframoxiden und Mischoxiden oder Verbundoxiden davon.

9. Abgassystem nach Anspruch 8, wobei der eine oder die mehreren anorganischen Oxidträger Aluminiumoxid und Cerdioxid umfassen.

## Revendications

1. Système d'échappement comprenant un catalyseur de démarrage à froid et un substrat à écoulement traversant ou filtre, le catalyseur de démarrage à froid comprenant
(1) un catalyseur de zéolite comprenant fer, palladium et une zéolite ; et
(2) un catalyseur supporté à base de métal du groupe du platine comprenant un ou plusieurs métaux du groupe du platine et un ou plusieurs supports d'oxyde inorganique,
dans lequel le catalyseur de zéolite forme le substrat à écoulement traversant ou filtre, et le catalyseur supporté à base de métal du groupe du platine est enduit sur le substrat à écoulement traversant ou filtre de catalyseur de zéolithe.

2. Système d'échappement selon la revendication 1 dans lequel le substrat à écoulement traversant est un monolithe en nid d'abeilles.

3. Système d'échappement selon la revendication 1 pour des moteurs à combustion interne comprenant en outre : un système catalytique
de réduction catalytique sélective ; un filtre à particules ; un système de filtre de réduction catalytique sélective ; un catalyseur d'adsorption de NOₓ ; un système catalytique à trois voies ; ou des combinaisons de ceux-ci.

4. Système d'échappement selon la revendication 1, dans lequel la zéolite est choisie dans le groupe constitué de zéolite bêta, faujasite, zéolite-L, zéolite ZSM, zéolite SSZ, mordénite, chabazite, offrétite, érionite, clinoptilolite, silicalite, zéolite de phosphate d'aluminium, zéolite mésoporeuse, zéolite à incorporation métallique et de mélanges de celles-ci.

5. Système d'échappement selon la revendication 1, dans lequel la zéolite est choisie dans le groupe constitué de zéolite bêta, ZSM-5, zéolite Fe-β, SSZ-33, zéolite Y, et mélanges de celles-ci.

6. Système d'échappement selon la revendication 5, dans lequel la zéolite est zéolite bêta.

7. Système d'échappement selon la revendication 1, dans lequel le ou les métaux du groupe du platine sont choisis dans le groupe constitué de platine, palladium, rhodium, iridium, et mélanges de ceux-ci.

8. Système d'échappement selon la revendication 1, dans lequel le ou les supports d'oxyde inorganique sont choisis dans le groupe constitué d'alumine, silice, dioxyde de titane, zircone, oxyde de cérium, oxyde de niobium, oxydes de tantale, oxydes de molybdène, oxydes de tungstène, et oxydes mixtes ou oxydes composites de ceux-ci.

9. Système d'échappement selon la revendication 8, dans lequel le ou les supports d'oxyde inorganique comprennent alumine et oxyde de cérium.
